# EUROPÄISCHE PATENTANMELDUNG

(11) **EP 1 587 084 A1**
(43) Veröffentlichungstag der Anmeldung: **19.10.2005**
(21) Anmeldenummer: 04008964.1
(22) Anmeldetag: 15.04.2004
(51) Int. Cl.: G11B 7/09

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Bammert, Michael, 78739 Hardt (DE); Suzuki, Tsuneo, 78087 Mönchweiler (DE)
(74) Vertreter: Thies, Stephan

(57) **Zusammenfassung**

Die vorliegende Erfindung betrifft ein Gerät zum Lesen und/oder Beschreiben optischer Aufzeichnungsträger mit einem optischen Abtaster (1) zum Erzeugen eines dem optischen Aufzeichnungsträger abtastenden Abtaststrahls und zum Detektieren eines vom optischen Aufzeichnungsträger beeinflußten Detektionsstrahls, wobei der optische Abtaster (1) einen Linsenhalter (2) mit daran angeordneten Aktuatorspulen (16, 26, 36, 36', 36'') und einen Magnet (11) zum Erzeugen eines die Aktuatorspulen (16, 26, 36, 36', 36'') durchlaufenden nichthomogenen Magentfelds aufweist.

Aufgabe der Erfindung ist es, ein derartiges Gerät im Hinblick auf die Aktuatorempfindlichkeit zu verbessern.

Erfindungsgemäß ist dazu vorgesehen, daß der Magnet (11) aus einem Hauptmagnet (21) und zumindest einem seitlich daran angeordneten Seitenmagnet (22, 23) entgegengesetzter Magnetfeldrichtung besteht.

## Beschreibung

Die Erfindung betrifft ein Gerät zum Lesen und/oder Beschreiben optischer Aufzeichnungsträger, beispielsweise CD, DVD oder zukünftige Formate optischer Aufzeichnungsträger. Es weist einen optischen Abtaster, der oft auch als Pick-up bezeichnet wird auf, zum Erzeugen eines dem optischen Aufzeichnungsträger abtastenden Abtaststrahls, im allgemeinen ein Laserstrahl, und zum Detektieren eines vom optischen Aufzeichnungsträger beeinflußten Detektionsstrahls. Die Beeinflussung wird im allgemeinen durch Reflektivitätsunterschiede oder die Höhenstruktur einer Aufzeichnungsschicht des optischen Aufzeichnungsträgers hervorgerufen und wirkt sich als Intensitätsschwankungen in einem vom optischen Aufzeichnungsträger reflektierten oder dem optischen Aufzeichnungsträger durchlaufenden Strahl, dem Detektionsstrahl aus. Der optische Abtaster weist einen Linsenhalter mit daran angeordneten Aktuatorspulen und einen Magnet zum Erzeugen eines die Aktuatorspulen durchlaufenden nicht homogenen Magnetfelds auf. Der Linsenhalter dient zum Halten einer Fokuslinse, und ist beweglich bezüglich der Aktuatorspulen angeordnet, um ein Verschieben der Fokuslinse senkrecht zur Fläche des optischen Aufzeichnungsträgers, also in Fokusrichtung, oder parallel zur Fläche des optischen Aufzeichnungsträgers, also zum Spurführen, zu ermöglichen. Die Aktuatorspulen werden von einem Fokusbeziehungsweise einem Spurführungs-Regelkreis angesteuert um unterschiedlich starke Magnetfelder zu erzeugen, was sich in unterschiedlich starker Auslenkung des Linsenhalters in entsprechender Richtung auswirkt. Das nichthomogene Magnetfeld des Magneten wirkt mit dem durch die Aktuatorspulen erzeugten Magnetfeld zusammen um die Auslenkung des Linsenhalters zu erhalten. Oftmals sind auch statt eines einzigen Magneten zwei oder mehrere Magnete vorgesehen.

Aufgabe der Erfindung ist es, ein derartiges Gerät im Hinblick auf die Aktuatorempfindlichkeit zu verbessern.

Erfindungsgemäß ist dazu vorgesehen, daß der Magnet aus einem Hauptmagnet und zumindest einem seitlich daran angeordneten Seitenmagnet entgegengesetzter Magnetfeldrichtung besteht. Dies hat den Vorteil, daß ein stärkerer Gradient des Magnetfelds, insbesondere im Bereich des Übergangs von Hauptmagnet zu Seitenmagnet, vorliegt, wodurch eine stärkere Reaktion der Aktuatorspulen bei gleicher angelegter Spannung, also eine stärkere Auslenkung des Linsenhalters resultiert. Ist keine stärkere Auslenkung gewünscht, so wird vorteilhafterweise mit niedrigerer Spannung angesteuert. Durch Variation der Größe und der Feldstärke von Seitenmagnet und Hauptmagnet lassen sich eine große Bandbreite vom Gradienten und somit Empfindlichkeiten der Aktuatoren einstellen.

Vorteilhafterweise sind Seitenmagnete sowohl in Richtung der Spurführungsauslenkung als auch in Richtung der Fokusauslenkung angeordnet. Dies hat den Vorteil, daß der Gradient des Magnetfelds auch im relevanten Bereich der Fokusspulen oder im Bereich von Verkippungsspulen, sogenannten Tilt-Spulen, erhöht ist und auch für diese Aktuatoren eine erhöhte Empfindlichkeit erzielt wird. Oftmals reicht allerdings die Anordnung eines oder mehrerer Seitenmagnete in nur einer der genannten Richtungen aus.

Vorteilhafterweise ist die Länge des effektiven Teils der Fokusaktuatorspule geringer gewählt als die Länge des Hauptmagnets. Dies hat den Vorteil, daß keine oder nahezu keine Beeinflussung der Fokusaktuatorspule durch die Seitenmagnete hervorgerufen wird, was insbesondere bei in Richtung der Spurführungsauslenkung angeordneten Seitenmagneten sinnvoll ist. Als effektiver Teil der Aktuatorspule wird hierbei derjenige Teil angesehen, der Magnetfeldlinien erzeugt, die zum großen Teil parallel beziehungsweise anti-parallel zu demjenigen der externen Magnete, Haupt- und/oder Seitenmagnete, ausgerichtet ist und so in unterschiedlich starken Magnetfeldbereichen der externen Magnete liegt, daß ein durch den Aktuator laufender Strom mittels des durch ihn erzeugten Magnetfelds eine Kraft auf die Aktuatorspule ausübt.

Erfindungsgemäß ist vorgesehen, daß die effektiven Teile der Spurführungsaktuatorspulen in etwa gleichweit von der Grenze zwischen Hauptmagnet und Seitenmagnet, und in etwa parallel zu dieser Grenze angeordnet sind. Dies hat den Vorteil, daß eine möglichst gleichmäßige Kraft auf beide effektiven Teile wirkt.

Vorteilhafterweise sind die effektiven Teile von Verkippungsaktuatorspulen entweder ausschließlich im Bereich des Hauptmagneten oder ausschließlich im Bereich der Seitenmagnete angeordnet. Dies hat den Vorteil, daß kein oder nur ein stark reduzierter negativer Einfluß durch die entgegengesetzten Magnetfelder von Haupt- und Seitenmagneten auf die Verkippungsaktuatorspulen ausgeübt wird. Dies ist insbesondere dann der Fall, wenn die Seitenmagnete in Richtung der Spurführungsauslenkung angeordnet sind.

Weitere Vorteile der Erfindung und Varianten sind in der nachfolgenden Beschreibung von Ausführungsbeispielen angegeben. Dabei zeigen
- Fig. 1: Teil eines erfindungsgemäßen Geräts in räumlicher Darstellung;
- Fig. 2: Teil eines erfindungsgemäßen Geräts mit Blick auf den Linsenhalter;
- Fig. 3: Variante einer erfindungsgemäßen Magnetanordnung.

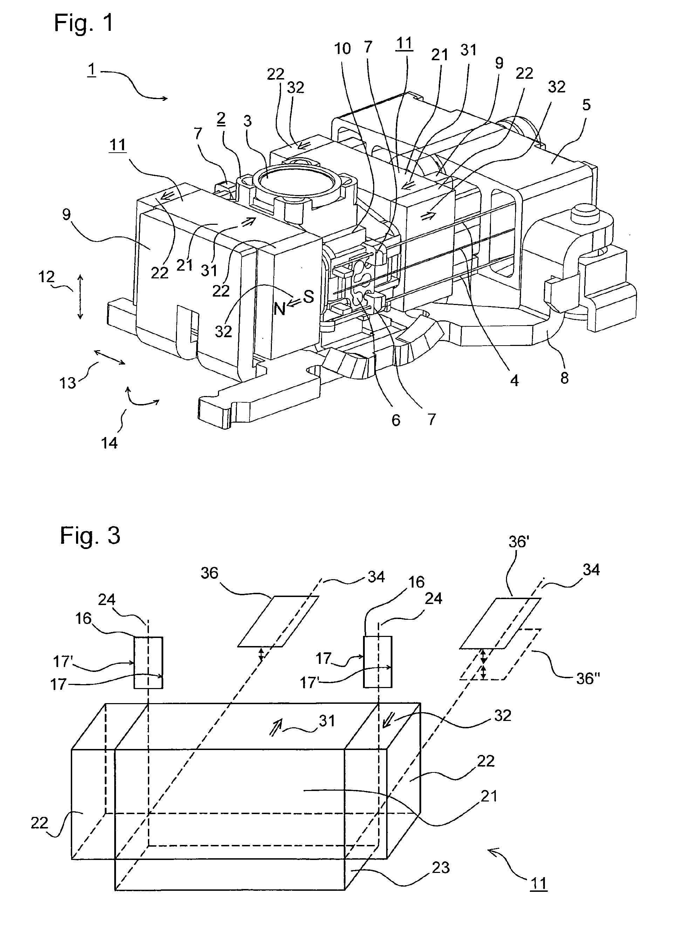

Fig. 1 zeigt einen Teil eines optischen Abtasters 1 eines erfindungsgemäßen Gerätes. Man erkennt den Linsenhalter 2, eine darin angeordnete Fokuslinse 3 sowie Haltedrähte 4, mittels deren der Linsenhalter 2 mit einer Halterung 5 mechanisch und elektrisch gekoppelt ist. Zur elektrischen Kopplung dienen Kontaktierungspunkte 6 am Linsenhalter 2, während zur mechanischen Kopplung mechanische Verbinder 7 vorgesehen sind. Man erkennt, daß zwei mechanische Verbinder auf der dem Betrachter zugewandten Seite und zwei weitere Verbinder 7, von denen einer nicht sichtbar ist, auf der dem Betrachter abgewandten Seite des Linsenhalters 2 angeordnet sind, wodurch eine mechanische Vierdrahtaufhängung des Linsenhalters 2 realisiert ist. Der mittlere Haltedraht 4 dient im wesentlichen zur elektrischen Kontaktierung und trägt nur geringfügig zur mechanischen Aufhängung bei. Im dargestellten Ausführungsbeispiel sind die Haltedrähte 4 noch nicht mit den Kontaktierungspunkten 6 elektrisch verbunden, um die Details besser sichtbar zu machen.

Die Halterung 5 ist mit einem metallischen Grundelement 8 verbunden, welches Laschen 9, 10 zum Bilden eines magnetischen Rückschlusses mit dem Dauermagnet 11 bildet. Die im Zwischenraum zwischen Dauermagnet 11 und Lasche 10 befindlichen Feldlinien wirken zusammen mit den Magnetfeldern hier nicht beziehungsweise nur teilweise sichtbarer Spulen, die als Aktuatoren für Einstellung des Fokus in Richtung des Doppelpfeils 12, der Spurführung in Richtung des Doppelpfeils 13, oder des Tilt-Ausgleichs entsprechend dem gebogenen Doppelpfeil 14 dienen.

Der Dauermagnet 11 besteht aus einem Hauptmagnet 21 und zwei seitlich in Richtung des Doppelpfeils 13 angeordneten Seitenmagneten 22. Das Magnetfeld des Hauptmagnets 21 ist mittels eines Pfeils 31 angedeutet, dasjenige der Seitenmagnete 22 mit einem Pfeil 32. Auf dem vorderen sichtbaren Seitenmagnet 22 ist zusätzlich die Lage des Nordbeziehungsweise des Südpols des Seitenmagnets 22 angegeben. Man erkennt, daß die magnetische Orientierung von Hauptmagnet 21 und Seitenmagnet 22 entgegengesetzt zueinander ist. Weiterhin erkennt man, daß die im linken vorderen Bereich der Abbildung liegenden Magnete 21, 22 im Vergleich zu ihren spiegelbildlich im mittleren oberen Bereich der Abbildung liegenden Magneten 21, 22 entgegengesetzte Ausrichtung haben.

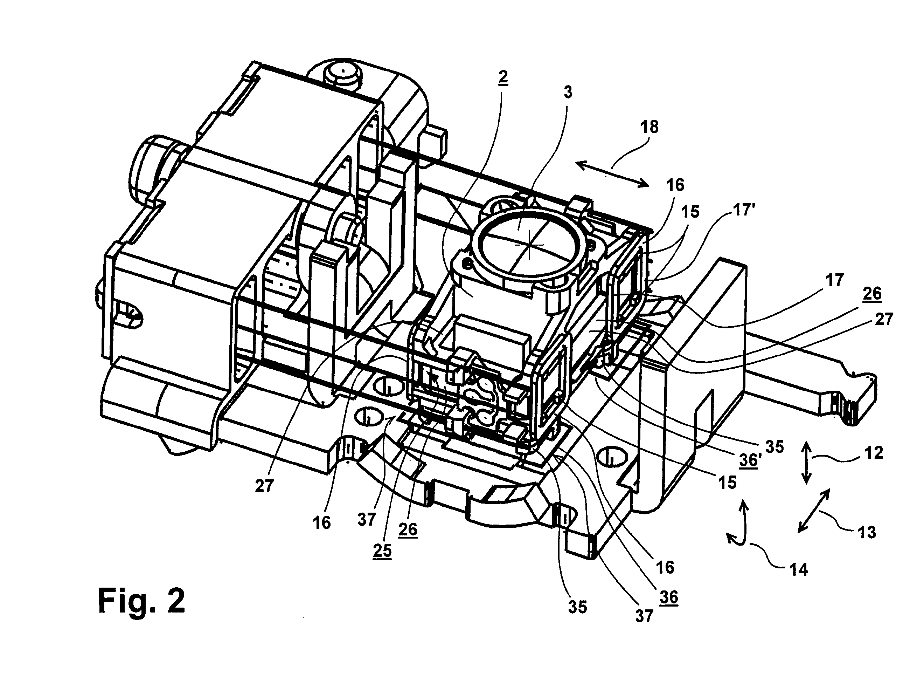

Fig. 2 zeigt einen Teil eines erfindungsgemäßen Geräts mit Blick auf den Linsenhalter 2. In dieser Darstellung sind die Magnete 11, 21, 22 nicht dargestellt. Man erkennt Halterungen 15, um die Spurführungsaktuatorspulen 16 gewickelt sind. Die senkrecht verlaufenden Abschnitte der Spurführungsaktuatorspule 16 sind der effektive Teil 17, 17' der Spurführungsaktuatorspule 16. Die von ihnen erzeugten Feldlinien sind in dem Bereich, in dem sie parallel zu dem vom Magneten 11 erzeugten Magnetfeld verlaufen dessen Richtung mit dem Pfeil 18 angedeutet ist, unterschiedlich starken Magnetfeldern ausgesetzt. Daher resultiert eine Bestromung der Spurführungsaktuatorspule 16 in einer Auslenkung in Richtung des Pfeils 13. Bei der erfindungsgemäßen Ausgestaltung des Magneten 11 als Hauptmagnet 21 und Seitenmagnet 22 ist dieser Effekt dadurch verstärkt, daß die zur Fokuslinse 3 nähergelegenen effektiven Teile 17 dem Magnetfeld des Hauptmagneten 21 ausgesetzt sind, während die weiter entfernt angeordneten effektiven Teile 17' dem entgegengesetzt gerichteten Magnetfeld des Seitenmagnets 22 ausgesetzt sind.

Weiterhin erkennt man eine umlaufende Ausnehmung 25, die komplett um den Linsenhalter 2 herumläuft. In ihr ist eine Fokussierungsaktuatorspule 26 aufgewickelt. Die effektiven Teile 27 sind diejenigen, die parallel zum Doppelpfeil 13 liegen, da die an ihrer Oberseite beziehungsweise Unterseite erzeugten Magnetfeldlinien im wesentlichen parallel beziehungsweise anti-parallel zu den vom Dauermagnet 11 erzeugten Linien liegen. Aufgrund des entgegengesetzt gerichteten Magnetfelds der sich spiegelbildlich gegenüberliegenden Magnete 11 sind die parallel zum Doppelpfeil 18 liegenden Teile der Fokussierungsaktuatorspule 26 zum Fokussieren nahezu nicht aktiv. Änderungen des durch die Fokussierungsaktuatorspule 26 erzeugten Magnetfelds resultieren in einer Aufwärts- oder Abwärtsbewegung in Richtung des Pfeils 12. Erfindungsgemäß ist vorgesehen, die Länge des effektiven Teils 27 kürzer als die Breite des Hauptmagnets 21 zu wählen, sodaß der effektive Teil 27 in einem homogenen Magnetfeld liegt. Je weiter der effektive Teil 27 zu den Seitenmagneten 22 hinragt, desto größer ist eine durch diese ausgelöste entgegengesetzte Auswirkung.

Man erkennt weiterhin Halterungen 35 auf die Verkippungsaktuatorspulen 36, 36' die hier nur schematisch angedeutet ist, aufgewickelt ist. Ihr effektiver Teil 37 liegt parallel zu dem effektiven Teil 27 der Fokussierungsaktuatorspule. Die Wicklung der im vorderen unteren Teil der Figur dargestellten Verkippungsaktuatorspule 36 und der im hinteren Bereich angeordneten Verkippungsaktuatorspule 36' sind entgegengesetzt, sodaß die entsprechenden Magnetfelder entgegengesetzt sind und im Zusammenwirken mit dem Magnetfeld des Dauermagneten 11 eine Verkippung des Linsenhalters 2 entsprechend dem Doppelpfeil 14 hervorrufen.

Fig. 3 zeigt eine Variante einer erfindungsgemäßen Magnetanordnung in schematischer Darstellung. Der Magnet 11 besteht aus einem Hauptmagnet 21, links und rechts angeordneten Seitenmagneten 22 sowie einem unten angeordneten Seitenmagnet 23. Oberhalb des Magnets 11 sind Spurführungsaktuatorspulen 16 angedeutet, die tatsächlich so hinter dem Magneten 11 angeordnet sind, daß sie nicht sichtbar wären. Man erkennt, daß die effektiven Teile 17, 17' von einer gestrichelt verlängerten Grenzlinie 24 zwischen Hauptmagnet 21 und Seitenmagnet 22 jeweils gleichweit entfernt sind. Ebenfalls der Sichtbarkeit wegen sind Verkippungsaktuatorspulen 36, 36' zu weit nach hinten dargestellt. Sie befinden sich oberhalb einer Grenzlinie 34, die gestrichelt verlängert der Grenze zwischen Hauptmagnet 21 und Seitenmagnet 23 entspricht. Der Seitenmagnet 23 sorgt dafür, daß die Feldlinien des Hauptmagneten 21 in Bereich der Verkippungsaktuatorspulen 36, 36' dichter beieinander liegen, und somit eine erhöhte Empfindlichkeit erzielt wird. Gemäß einer Variante sind die Verkippungsaktuatorspulen unterhalb der Grenzlinie 34 angeordnet, wie durch die gestrichelte Verkippungsaktuatorspule 36" angedeutet.

Erfindungsgemäß wird eine erhöhte Trackingempfindlichkeit und und eine leichte Variierungsmöglichkeit zwischen Fokus-und Trackingempfindlichkeit durch Breitenänderung 22 der Seitenmagnete erreicht. Durch die zusätzlichen Seitenmagnete 22, die gegenpolig zum Hauptmagnet 21 angeordnet sind, wird eine zusätzliche Kraft auf die äußeren Stränge der Trackingspule 16 erzeugt, die sogenannte Lorentzkraft. Hierbei wird eine Empfindlichkeitssteigerung für die auch als Tracking bezeichnete Spurführung erreicht. Für diese Steigerung wurden bei 1kHz Werte von ca. 40% gefunden. Gleichzeitig tritt für Focus einen geringfügiger Verlust von ca. 20% auf, der sich aber durch geeignete Maßnahmen, wie Längenänderung der entsprechenden Spule kompensieren läßt. Durch varriieren der Magnetbreiten lassen sich diese Werte sehr leicht kontrollieren.

Die magnetischen Feldlinien verlaufen senkrecht durch die Spule. Bei der Bestromung der Spule ergibt sich eine Kraft quer dazu, gemäß der sogenannten "rechte Hand Regel". Bezüglich einer Trackingspule 16 läuft der Strom z.B. auf der einen Spulenseite 17 hoch und auf der anderen Seite 17' wieder nach unten. Wenn man den Hauptmagnet 21 sehr breit machen würde, sodaß beide Seiten 17, 17' sich in dessen Magnetfeld befinden, würden sich die Kräfte der beiden Seiten 17, 17' aufheben und der Linsenhalter 2 würde sich nicht in Trackingrichtung bewegen. D.h. bei der Variante mit nur Hauptmagnet 21 bedeckt dieser nur die Hälfte der Trackingspulen 16, damit die Trackingempfindlichkeit optimal ist.

Bei der Variante mit Seitenmagneten 28 werden die jeweils äußeren Stränge 17' der Trackingspulen 16 auch mit einem Magnetfeld belegt. Da der Strom hier im Vergleich zu den inneren Strängen 17 entgegengesetzt verläuft wird das Magnetfeld um 180° gedreht, um für alle Stränge eine Kraft in dieselbe Richtung zu erzeugen. Durch zusätzliche Anbringung von Seitenmagneten 22 an die üblichen Hauptmagneten 21, läßt sich die Empfindlichkeit für Tracking signifikant erhöhen und durch Variierung der Magnetdicken sehr gut justieren.

## Patentansprüche

1. Gerät zum Lesen und/oder Beschreiben optischer Aufzeichnungsträger mit einem optischen Abtaster (1) zum Erzeugen eines den optischen Aufzeichnungsträger abtastenden Abtaststrahls und zum Detektieren eines vom optischen Aufzeichnungsträger beeinflußten Detektionsstrahls, wobei der optische Abtaster (1) einen Linsenhalter (2) mit daran angeordneten Aktuatorspulen (16, 26, 36, 36', 36'') und einen Magnet (11) zum Erzeugen eines die Aktuatorspulen (16, 26, 36, 36', 36'') durchlaufenden nichthomogenen Magentfelds aufweist, **dadurch gekennzeichnet, daß** der Magnet (11) aus einem Hauptmagnet (21) und zumindest einem seitlich daran angeordneten Seitenmagnet (22) entgegengesetzter Magnetfeldrichtung besteht.

2. Gerät nach Anspruch 1, **dadurch gekennzeichnet, daß** Seitenmagnete (22, 23) sowohl in Richtung der Spurführungsauslenkung als auch in Richtung der Fokusauslenkung angeordnet sind.

3. Gerät nach einem der vorhergehenden Ansprüche, **dadurch gekennzeichnet, daß** die Länge des effektiven Teils (27) der Fokusaktuatorspule (26) geringer ist, als die Länge des Hauptmagnets (21).

4. Gerät nach einem der vorhergehenden Ansprüche, **dadurch gekennzeichnet, daß** die effektiven Teile der Spurführungsaktuatorspule (17, 17') in etwa gleich weit von der Grenze (24) zwischen Hauptmagnet (21) und Seitenmagnet (22), und in etwa parallel zu dieser angeordnet sind.

5. Gerät nach einem der vorhergehenden Ansprüche, **dadurch gekennzeichnet, daß** die effektiven Teile (37) von Verkippungsaktuatorspulen (36, 36', 36'') entweder ausschließlich im Bereich des Hauptmagnets (21) oder ausschließlich im Bereich des Seitenmagnets (22, 23) angeordnet sind.
